# NEUE EUROPÄISCHE PATENTSCHRIFT

(11) **EP 2 756 192 B2**
(45) Veröffentlichungstag und Bekanntmachung des Hinweises auf die Entscheidung über den Einspruch: **11.11.2020**
(45) Hinweis auf die Patenterteilung: 21.02.2018
(21) Anmeldenummer: 12740308.7
(22) Anmeldetag: 07.07.2012
(51) Int. Cl.: F04B 39/00, F04B 39/04, F16J 1/09, F16J 9/22

(54) **HUBKOLBEN FÜR EINEN HUBKOLBENKOMPRESSOR ZUR ERZEUGUNG VON DRUCKLUFT FÜR EIN FAHRZEUG**
STROKE PISTON FOR A STROKE PISTON COMPRESSOR FOR GENERATING COMPRESSED AIR FOR A VEHICLE
PISTON DE LEVÉE POUR UN COMPRESSEUR ALTERNATIF POUR LA PRODUCTION D'AIR COMPRIMÉ POUR UN VÉHICULE

(30) Priorität: 13.09.2011 DE 102011112942; 03.04.2012 DE 102012006834
(43) Veröffentlichungstag der Anmeldung: 23.07.2014
(73) Patentinhaber: WABCO GmbH, 30453 Hannover (DE)
(72) Erfinder: GNIESMER, Volker, 31061 Alfeld (DE); HÖLZEL, Folkhard, 31029 Banteln (DE); SCHWARZE, Christian, 30167 Hannover (DE); WILKEN, Christoph, 48499 Salzbergen (DE)
(74) Vertreter: Lauerwald, Jörg
(86) Internationale Anmeldenummer: PCT/EP2012/002873
(87) Internationale Veröffentlichungsnummer: WO 2013/037436

(56) Entgegenhaltungen:
- EP-B1- 1 431 630
- DE-A1- 1 775 655
- DE-A1-102007 060 091
- DE-B- 1 193 632
- GB-A- 1 566 575
- JP-A- 2010 096 125
- US-A- 4 972 764
- US-B1- 7 044 473
- US-B2- 6 935 220

## Beschreibung

Die Erfindung betrifft einen Hubkolben für einen Hubkolbenkompressor zur Erzeugung von Druckluft für ein Fahrzeug, insbesondere für ein Nutzfahrzeug, wobei der Hubkolben einen Kolbenkörper mit einem Kolbenboden, einem Kolbenschaft mit Kolbenschaftwänden und vorzugsweise Bolzennaben zur Aufnahme eines Kolbenbolzens umfasst und wenigstens zwei in umlaufenden Ringnuten des Kolbenkörpers einbringbare Kolbenringe, vorzugsweise drei Kolbenringe, von denen bevorzugt wenigstens der dem Kolbenboden nähere Kolbenring als Kompressionsring bzw. Verdichtungsring ausgebildet ist und wenigstens ein Kolbenring, bevorzugt der dem Kolbenschaft nächste Kolbenring, als Ölabstreifring ausgebildet ist, umfasst und wobei jeweils zwischen zwei Ringnuten und zwischen dem Kolbenboden und der dem Kolbenboden am nächsten angeordneten Ringnut und an der der oder den anderen Ringnuten abgewandten Seite der dem Kolbenschaft am nächsten angeordneten Ringnut Stege des Kolbenkörpers vorhanden sind. Ein derartiger Hubkolben ist zum Beispiel aus der DE-1193632-B1 bekannt.

Bei einem Hubkolbenkompressor der vorgenannten Gattung kann es zu einem unliebsamen bzw. schädlichen Ölaustrag in die gefördert Luft kommen. Dieses ausgetragene, in der Luft geführte Öl kann Verschmutzungen der mit dieser Luft versorgten Systeme oder auch von anderen nachfolgenden Systemen verursachen, die zu nicht unerheblichen Problemen führen können, die servicetechnisch nur sehr schwer wieder behebbar sind und die Lebensdauer der Systeme verkürzen können.
Abgesehen davon verursacht diese verschmutzte Luft auch eine erhöhte Umweltbelastung.

Der Erfindung liegt daher die Aufgabe zugrunde, eine verbesserte Reinhaltung der geförderten Luft im Hinblick auf den vorgeschilderten Ölaustrag zu erzielen.

Diese Aufgabe wird erfindungsgemäß mit einem Hubkolben der eingangs genannten Gattung dadurch gelöst, dass der zweite Steg des Kolbenkörpers über einen Teilabschnitt seiner Steghöhe, die parallel zur Achse des Kolbenkörpers gemessen ist, durch wenigstens einen Rezess gegenüber dem Durchmesser des Kolbenkörpers zurückgesetzt ist.

Durch diese erfindungsgemäße Lösung wird insgesamt eine Verbesserung des Dichtverhaltens des Hubkolbens bewirkt. Insbesondere könnten hierdurch Ausgleichsvolumen oder Strömungsquerschnitte im Feld der Kolbenringe (Ringfeld) erreicht werden, durch die Ringzwischenraumdrücke gezielt eingestellt werden und / oder durch die das Strömungsverhalten ölhaltiger Luft bezüglich Ölaustrag aus dem antriebsseitigen Raum des Hubkolbenkompressors erschwert wird.

Weitere erfindungsgemäße, vorteilhafte Weiterbildungen oder bevorzugte Ausgestaltungen des erfindungsgemäßen Hubkolbens ergeben sich aus den Merkmalen der Unteransprüche.

Eine bevorzugte Weiterbildung des erfindungsgemäßen Kolbens sieht vor, dass Stege des Kolbenkörpers durch Rezesse mit unterschiedlichen Geometrien und / oder durch Rezesse unterschiedlich gestaltet sind. Hierdurch können die Strömungsquerschnitte des erfindungsgemäßen Hubkolbens besonders gut variiert werden um die Dichtigkeit des Kolbens hinsichtlich eines möglichen Ölaustrags bzw. -über- oder -durchtritts zu verbessern. Insbesondere kann auch der sogenannte Feuersteg des erfindungsgemäßen Hubkolbens, der sich zwischen dem Kolbenboden und dem ihm am nächsten angeordneten Kolbenring befindet, noch mit in diese Maßnahmen einbezogen werden.

Der jeweils vorgesehene Rezess in einem der jeweils betroffenen Stege kann insbesondere eine Stufe sein oder aufweisen, eine um den Kolbenkörper umlaufende Nut sein oder aufweisen und / oder eine um den Kolbenkörper umlaufende Abfasung sein oder aufweisen.

Eine solche Abfasung kann einer Ringnut benachbart und / oder der Ringnut zu- oder abgewandt sein.

Eine andere Weiterbildung des erfindungsgemäßen Hubkolbens sieht vorteilhaft vor, dass wenigstens ein Rezess um den Kolbenkörper bezüglich der Achse des Kolbenkörpers rotationsunsymmetrisch und / oder exzentrisch umläuft. Dabei können unterschiedliche Maße der Unsymmetrie und / oder Exzentrizität insbesondere in Pleuelschwingrichtung im Verhältnis zur Kolbenbolzenrichtung des Hubkolbens vorgesehen sein.

Der Umlauf des Rezesses könnte im Wesentlichen einem Oval oder einer Ellipsenform folgen oder auch einer Freiform.

Auch unabhängig von einer bezüglich des gesamten Umlaufs des Rezesses gesehenen Asymmetrie oder Exzentrizität kann vorgesehen sein, dass wenigstens ein Rezess um den Kolbenkörper mit unkonstanter Rezesstiefe umläuft, also kontinuierlich oder auch abschnittsweise unterschiedliche radiale Rezesstiefen aufweist. Natürlich kann durch eine unkonstante Rezesstiefe letztlich auch eine Asymmetrie oder Exzentrizität überhaupt erreicht werden.

Für die Dichtigkeit des erfindungsgemäßen Hubkolbens werden vorzugsweise auch erfindungsgemäße Maßnahmen an den beteiligten Kolbenringen oder an ihrer Auswahl vorgenommen.

Dazu kann beispielsweise wenigstens ein Kolbenring als Verdichtungsring ausgebildet sein und hierfür ein Nasenminutenring vorgesehen sein.

Wenigstens ein anderer Kolbenring kann als Ölabstreifring ausgebildet sein und hierfür ein Schlauchfederring, vorzugsweise ein Gleichfasenschlauchfederring oder ein Dachfasenschlauchfederring, sein. Bevorzugt werden zwei Verdichtungsringe und ein Ölabstreifring verwendet um insbesondere hinsichtlich der Verdichtungswirkung eine Redundanz vorzuhalten, zum Beispiel im Falle eines Kolbenringbruchs.

Der als Ölabstreifring vorgesehene Schlauchfederring weist nach einer Weiterbildung der Erfindung wenigstens zwei nach außen vorragende Stege auf. Hierdurch wird vorteilhaft die Öldichtigkeit in diesem Bereich in erfindungsgemäßer Lösung der gestellten Aufgabe verbessert.

Es hat sich erfindungsgemäß gezeigt, dass eine besondere Verbesserung dann eintritt, wenn, wie bevorzugt vorgesehen, die Stege Stegehöhen aufweisen, die, gemessen parallel zur Achse des Kolbenringes, gemeinsam nicht mehr als 20% der Höhe des Kolbenringes entsprechen und einzeln nicht mehr als jeweils 10% der Höhe des Kolbenringes entsprechen. Dabei können allerdings weitere Verbesserungen dadurch erzielt werden, dass die Stege Stegehöhen aufweisen, die, gemessen parallel zur Achse des Kolbenringes, unterschiedlich groß sind.

Bei einem bevorzugt vorgesehenen Gleichfasenschlauchfederring oder Dachfasenschlauchfederring haben die Stege Anbindungswinkel, wobei Anbindungswinkel der Stege bevorzugt eine Winkelgröße von 0 bis 60 Grad aufweisen können. Anbindungswinkel der Stege könnten zudem eine unterschiedliche und / oder asymmetrische Winkelgröße aufweisen.

Eine nächste Weiterbildung der Erfindung sieht vor, dass der Ölabstreifring wenigstens eine, vorzugsweise jedoch mehrere, Öldrainagemöglichkeit(en) zum radialen Durchtritt von Öl aufweist. Die Öldrainagemöglichkeit(en) könnte(n) zum Beispiel als Bohrung(en) oder als Schlitz(e) ausgeführt sein. Hierdurch wird ein Ölübertrag mit Vorteil weiter vermindert.

Wenn zudem, wie nach einer Weiterbildung der Erfindung vorgesehen, die für einen Ölabstreifring vorgesehene Ringnut wenigstens eine, vorzugsweise mehrere, Öldrainagemöglichkeit(en) aufweist, könnte diese jeweilige Öldrainagemöglichkeit zu einem hohlen Innern des Kolbenkörpers hin geschlossen sein, also zum Beispiel eher becken- oder buchtartig ausgebildet sein, oder in ein hohles Innere des Kolbenkörpers führen, und vorzugsweise könnte dabei eine Öldrainagemöglichkeit des Ölabstreifringes mit wenigstens einer Öldrainagemöglichkeit der Ringnut wenigstens teilweise korrespondieren. Die Öldrainagemöglichkeit der Ringnut könnte in Umlaufrichtung der Ringnut eine schlitzförmige Erstreckung aufweisen.

Ausführungsbeispiele, aus denen sich weitere erfinderische Merkmale ergeben können, sind in der Zeichnung dargestellt. Es zeigen:
Fig 1 einen Schnitt durch einen erfindungsgemäßen Hubkolben,
Fig. 2 den Detailausschnitt 1b in Fig. 1 in vergrößerter Darstellung,
Fig. 3 einen Querschnitt eines als Nasenminutenring ausgebildeten Kompressionsrings,
Fig. 4 a) bis d) weitere Ausführungsbeispiele von Details gemäß Fig. 2,
Fig. 5 a) bis d) und Fig. 6 a) bis d) unterschiedliche Möglichkeiten von Rezessformen in Stegen gem. den Fig. 1 oder 4,
Fig. 7 einen Detailausschnitt eines Steges mit Rezess im Schnitt,
Fig. 8 eine Umfangslinie des Rezesses gemäß Fig. 7 in Draufsicht auf die in Fig. 7 mit A, A bezeichnete Schnittlinie,
Fig. 9 a) bis c) ein Beispiel eines Ölabstreifrings in verschiedenen Schnitt- bzw. Ausschnittansichten,
Fig. 10 eine Schnittansicht eines anderen Ausführungsbeispiels eines Ölabstreifrings und
Fig. 11 und Fig. 12 zwei unterschiedliche Beispiele einer Ringnut für einen Ölabstreifring im Schnitt.

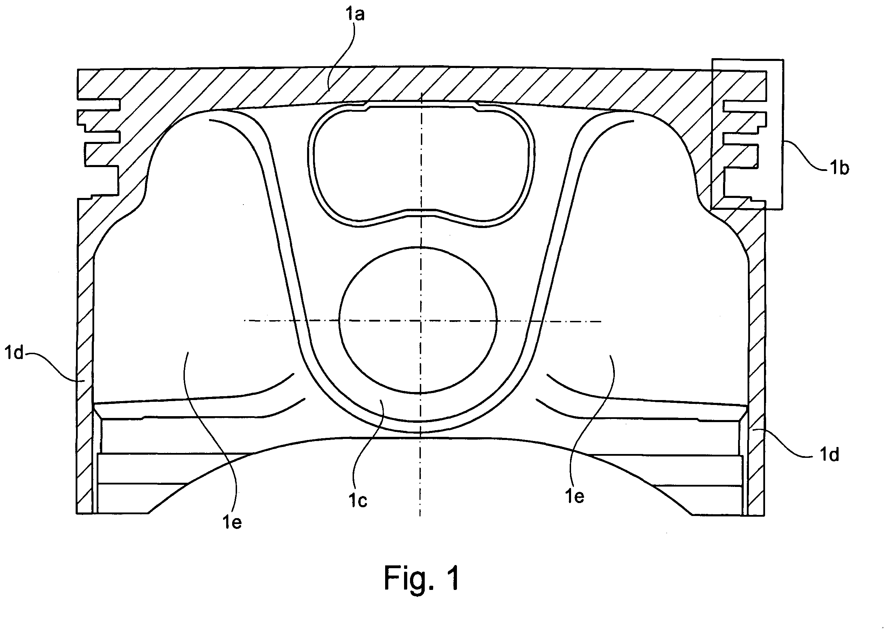

Fig. 1 zeigt einen Schnitt durch einen erfindungsgemäßen Hubkolben. Der Hubkolben weist einen Kolbenboden 1a, Bolzennaben 1c, einen Kolbenschaft mit tragenden Kolbenschaftwände 1d und Kastenwände 1e auf, die Kolbenschaftwände 1d mit den Bolzennaben 1c verbinden.

Zudem weist der Hubkolben ein Ringfeld 1b mit drei Ringnuten auf, die im Weiteren näher erläutert werden. Allerdings ist auch in dieser Fig. 1 schon zu erkennen, dass einzelne der die Ringnuten begrenzenden Stege erfindungsgemäß Rezesse aufweisen.

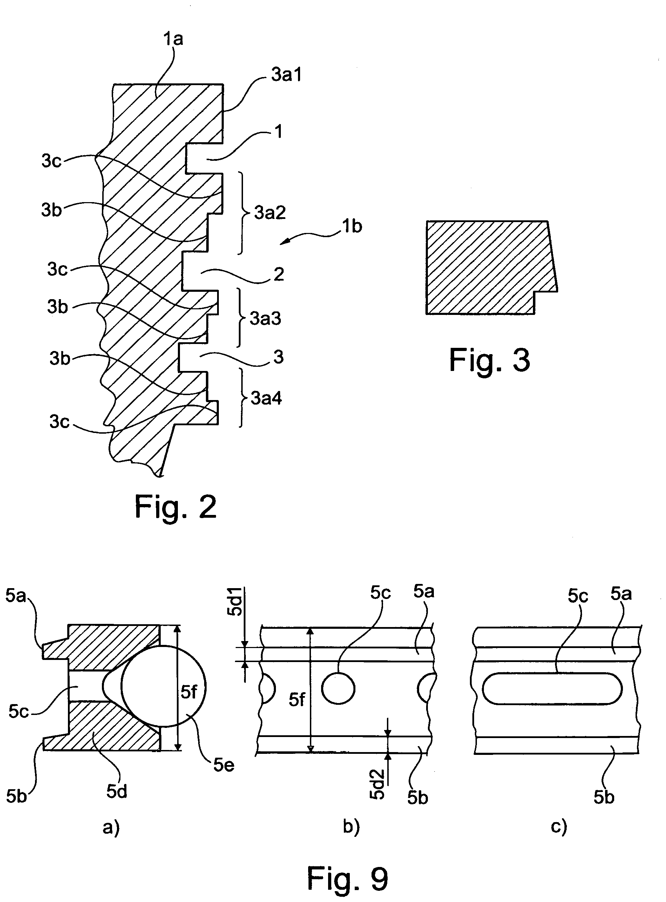

Fig. 2 zeigt das Ringfeld 1b gemäß Fig. 1 in vergrößerter Darstellung.

Die Ringnuten sind dort als erste Ringnut 1, zweite Ringnut 2 und dritte Ringnut 3 vom Kolbenboden 1a ausgehend numeriert. Die die drei Ringnuten begrenzenden Stege sind ebenfalls durchnumeriert als erster Steg 3a1, zweiter Steg 3a2, dritter Steg 3a3 und vierter Steg 3a4. Der erste Steg 3a1 ist dabei der sogenannte Feuersteg. Die Stege 3a2 bis 3a4 zeigen dabei Beispiele von erfindungsgemäßen, umlaufenden Rezessen 3b, die gegenüber den äußeren Mantelflächen 3c des Hubkolbens radial zurückgesetzt bzw. eingeschnitten sind. Im Ausführungsbeispiel gemäß Fig. 2 sind die Rezesse 3b jeweils stufig zurückgesetzt.

Die erste Ringnut 1 und die zweite Ringnut 2 sind für Kompressionsringe vorgesehen, die, wie beispielhaft in Fig. 3 im Schnitt gezeigt, als Nasenminutenringe ausgebildet sein können.

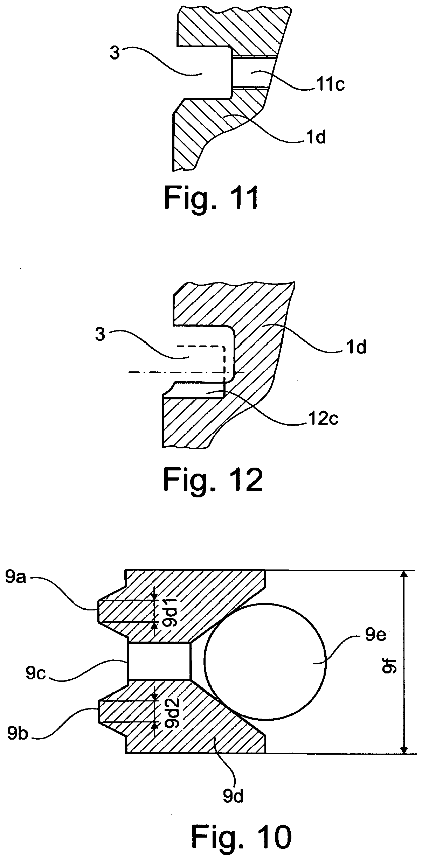

Die dritte Ringnut 3 ist für einen Ölabstreifring vorgesehen, wie er zum Beispiel in den Fig. 9 oder 10 gezeigt ist.

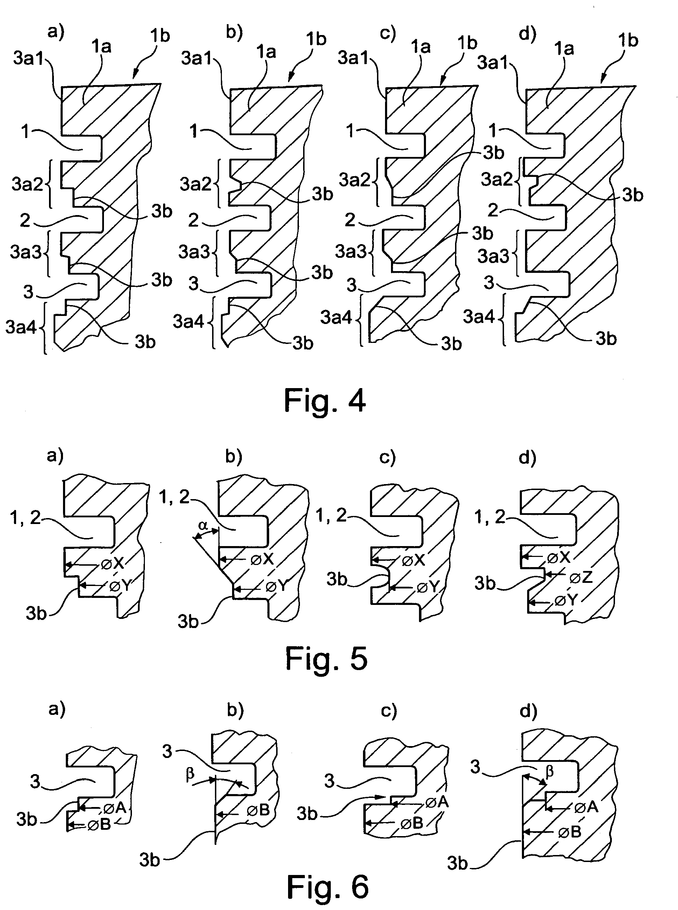

Die Fig. 4 a) bis d) zeigen weitere mögliche Ausführungsbeispiele für ein Ringfeld 1b, in denen die jeweiligen Stege 3a2 bis 3a3 unterschiedliche, mögliche Querschnittsformen von Rezessen 3b zeigen. Wenn in den Beispielen auch nicht gezeigt, könnte auch der Feuersteg 3a1 einen Rezess aufweisen. Die in Fig. 4a) bis d) gezeigten Stege 3a1 bis 3a4 sind auch unabhängig voneinander variierbar. Die Bezugszeichen entsprechen hierbei denen aus der Fig. 2.

Die Fig. 5a) bis d) zeigen noch weitere mögliche Querschnitte der Rezesse 3b insbesondere für die Stege unterhalb der Kompressionskolbenringnuten (erste Ringnut 1 und / oder zweite Ringnut 2).

Die Fig. 6a) bis d) zeigen noch weitere mögliche Querschnitte der Rezesse 3b insbesondere für den Steg unterhalb der Ölabstreifkolbenringnut (dritte Ringnut 3).

Bei Fig. 5a) ist der Durchmesser ØY des Rezesses 3b gegenüber dem Durchmesser ØX des Kolbenschafts bzw. der Kolbenschaftwand 1d (siehe Fig. 1) stufenförmig zurückversetzt, d. h. der Durchmesser ØX des Kolbenschafts ist größer als der Durchmesser ØY des Rezesses 3b. Die Ausgestaltung der Fig. 5b) ist ähnlich zu der gemäß Fig. 5a), allerdings ist hier noch zwischen dem Durchmesser ØX und dem Durchmesser ØY eine Fase unter einem Winkel α vorgesehen. Gemäß Fig. 5c) ist der Rezess 3b in Form einer Nut vorgesehen, wobei der Durchmesser ØY der Nut geringer als der Durchmesser ØX des Kolbenschafts ist. In Fig. 5d) ist eine Kombination aus Fig. 5a) bzw. 5b) und Fig. 5c) dargestellt, in dem sowohl der Durchmesser ØZ einer Nut des Rezesses 3b als auch ein sich unterhalb der Nut befindender Bereich des Rezesses mit einem Durchmesser ØY kleiner als der Durchmesser ØX des Kolbenschaftes ist.

Gemäß Fig. 6a) ist der Durchmesser ØA des Rezesses 3b gegenüber dem Durchmesser ØB des Kolbenschafts bzw. der Kolbenschaftwand 1d (siehe Fig. 1) stufenförmig zurückversetzt, d. h. der Durchmesser ØB des Kolbenschafts ist größer als der Durchmesser ØA des Rezesses 3b. Die Ausgestaltung der Fig. 6b) ist ähnlich zu der gemäß Fig. 6a), allerdings ist hier noch am Durchmesser ØB eine Fase unter einem Winkel β gegenüber der dritten Ringnut 3 vorgesehen. Fig. 6c) ist ähnlich zu Fig. 6a) wobei hier die Höhe des Rezesses 3b geringer ist als bei Fig. 6a). Fig. 6d) ist eine Kombination der Fig. 6a) bzw. 6c) und Fig. 6b) dargestellt. Hierbei ist wieder der Durchmesser ØB des Kolbenschafts größer als der Durchmesser ØA des Rezesses 3b, wobei zusätzlich zwischen dem Durchmesser ØB des Kolbenschafts und dem Durchmesser ØA des Rezesses 3b eine Fase unter einem Winkel β angeordnet ist.

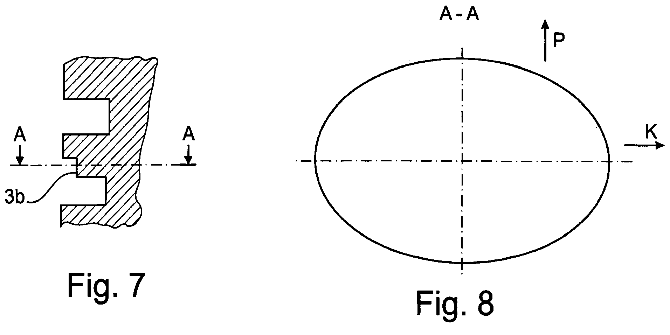

Die Fig. 7 zeigt noch einmal beispielhaft eine Querschnittsansicht irgendeines Steges zwischen Ringnuten mit einem Rezess 3b mit einer Schnittlinie A, A. Blickt man auf diese Schnittlinie A, A entsprechend Fig. 8, so wird an diesem Beispiel einmal deutlich gemacht, dass der Rezess 3b auch unsymmetrisch und / oder exzentrisch bezüglich der Achse des Hubkolbens ausgebildet sein kann, die Einschnitttiefe des Rezesses 3b im Verlauf seines Umlaufes also z. B. unterschiedlich groß sein könnte. Insbesondere ist eine Ovalform oder Ellipsenform des Rezess-Umlaufes denkbar. Hierbei wird die Kolbenbolzenrichtung mit einem Pfeil K und die Pleuelschwingrichtung mit einem Pfeil P bezeichnet.

Die Fig. 9 und 10 zeigen im Schnitt einmal ein Beispiel eines Gleichfasenschlauchfederrings (Fig. 9) und einmal eines Dachfasenschlauchfederrings (Fig. 10) als mögliche Ausführung eines Ölabstreifrings. Die Ölabstreifringbeispiele weisen jeweils einen Grundkörper 5d bzw. 9d mit zwei radial vorragende Stege 5a, b bzw. 9a, b auf. Zudem weisen beide Ausführungsbeispiele einen Federkörper 5e bzw. 9e auf. Zudem sind in den beiden Beispielen jeweilige Bohrungen 5c bzw. 9c zwischen den Stegen 5a, b bzw. 9a, b als Öldrainage vorgesehen. Wie die Figuren 5b) und 5c) zeigen, könnten diese Öldrainagen als über den Umfang des Ölabstreifrings verteilte Bohrungen 5c1 oder auch als langgestrecktere Schlitze 5c2 ausgebildet sein.

Der Gleichfasenschlauchfederring gemäß Fig. 9 kann beispielsweise geometrisch so ausgelegt sein, dass die Steghöhe 5d1 des Steges 5a addiert mit der Steghöhe 5d2 des Steges 5b kleiner als 20% der Ringhöhe 5f des gesamten Gleichfasenschlauchfederrings ist, wobei die jeweilige Steghöhe 5d1 bzw. 5d2 jeweils nur 10% der Ringhöhe 5f beträgt. Beträgt beispielsweise die Ringhöhe 5f = 4 mm, so folgt daraus, dass die Steghöhe 5d1 des Steges 5a und die Steghöhe 5d2 des Steges 5b jeweils kleiner als 0,4 mm sein müssen.

Der Dachfasenschlauchfederring gemäß Fig. 10 kann beispielsweise geometrisch so ausgelegt sein, dass die Steghöhe 9d1 des Steges 9a addiert mit der Steghöhe 9d2 des Steges 9b kleiner als 20% der Ringhöhe 9f des gesamten Gleichfasenschlauchfederrings ist, wobei die jeweilige Steghöhe 9d1 bzw. 9d2 jeweils nur 10% der Ringhöhe 9f beträgt. Beträgt beispielsweise die Ringhöhe 9f = 4 mm, so folgt daraus, dass die Steghöhe 9d1 des Steges 9a und die Steghöhe 9d2 des Steges 9b jeweils kleiner als 0,4 mm sein müssen.

Die Stege 5a, b bzw. 9a, b sollen eine solche axiale Höhe haben, dass die jeweilige Steghöhe nicht mehr als 10% der Gesamt-Ölabstreifringhöhe ausmacht und die Steghöhen zusammen nicht mehr als 20% dieser Gesamt-Ölabstreifringhöhe.

Die Anbindungswinkel können variieren wie ebenfalls in den Figuren 9 und 10 nur beispielhaft angedeutet.

In den Fig. 11 und 12 ist noch ein weiteres mögliches Beispiel einer dritten Ringnut 3 für einen Ölabstreifring im Schnitt gezeigt. In diesen Figuren ist beispielhaft zu erkennen, dass auch die dritte Ringnut 3 mindestens eine, vorzugsweise mehrere, Öldrainage(n) 11c bzw. 12c aufweisen kann, die durch die Kolbenschaftwand 1d hindurchführen kann (bei 11c) oder als Sackloch ausgebildet ist (bei 12c) und die mit den Öldrainagen 5c (Fig. 9) bzw. 9c (Fig. 10) des Ölabstreifringes wenigstens teilweise korrespondieren kann.

## Patentansprüche

1. Hubkolben für einen Hubkolbenkompressor zur Erzeugung von Druckluft für ein Fahrzeug, insbesondere für ein Nutzfahrzeug, wobei der Hubkolben einen Kolbenkörper mit einem Kolbenboden (1a), einem Kolbenschaft mit Kolbenschaftwänden (1d) und vorzugsweise Bolzennaben (1c) zur Aufnahme eines Kolbenbolzens umfasst und drei in drei umlaufenden Ringnuten (1; 2; 3) des Kolbenkörpers einbringbare Kolbenringe, von denen bevorzugt wenigstens der dem Kolbenboden (1a) nähere Kolbenring als Kompressionsring bzw. Verdichtungsring ausgebildet ist und wenigstens ein Kolbenring, bevorzugt der dem Kolbenschaft nächste Kolbenring, als Ölabstreifring ausgebildet ist, umfasst und wobei zwischen dem Kolbenboden (1a) und einer ersten Ringnut (1) ein erster Steg (3a1), zwischen der ersten Ringnut (1) und einer zweiten Ringnut (2) ein zweiter Steg (3a2), zwischen der zweiten Ringnut (2) und einer dritten Ringnut (3) ein dritter Steg (3a3) und zwischen der dritten Ringnut (3) und dem Kolbenschaft ein vierter Steg (3a4) vorhanden sind, **dadurch gekennzeichnet,**
**dass** der zweite Steg (3a2) des Kolbenkörpers über einen Teilabschnitt seiner Steghöhe, die parallel zur Achse des Kolbenkörpers gemessen ist, durch wenigstens einen Rezess (3b) gegenüber dem Durchmesser des Kolbenkörpers zurückgesetzt ist.

2. Hubkolben nach Anspruch 1, **dadurch gekennzeichnet, dass** auch ein erster Steg (3a1) zwischen Kolbenboden (1a) und der ersten Ringnut (1) und/oder ein vierter Steg (3a4) zwischen der dritten Ringnut (3) und dem Kolbenschaft einen Rezess (3b) aufweist.

3. Hubkolben nach Anspruch 1 oder 2, **dadurch gekennzeichnet, dass** Stege (3a1; 3a2; 3a3; 3a4) des Kolbenkörpers durch Rezesse (3b) mit unterschiedlichen Geometrien und / oder durch Rezesse (3b) unterschiedlich gestaltet sind.

4. Hubkolben nach einem oder mehreren der vorhergehenden Ansprüche, **dadurch gekennzeichnet, dass** wenigstens ein Rezess (3b) eine Stufe ist oder aufweist.

5. Hubkolben nach einem oder mehreren der vorhergehenden Ansprüche, **dadurch gekennzeichnet, dass** wenigstens ein Rezess (3b) eine um den Kolbenkörper umlaufende Nut ist oder aufweist.

6. Hubkolben nach einem oder mehreren der vorhergehenden Ansprüche, **dadurch gekennzeichnet, dass** wenigstens ein Rezess (3b) eine um den Kolbenkörper umlaufende Abfasung ist oder aufweist.

7. Hubkolben nach Anspruch 6, **dadurch gekennzeichnet, dass** die Abfasung einer Ringnut (1; 2; 3) benachbart und / oder der Ringnut (1; 2; 3) zu- oder abgewandt ist.

8. Hubkolben nach einem oder mehreren der vorhergehenden Ansprüche, **dadurch gekennzeichnet, dass** wenigstens ein Rezess (3b) um den Kolbenkörper bezüglich der Achse des Kolbenkörpers rotationsunsymmetrisch und / oder exzentrisch umläuft.

9. Hubkolben nach Anspruch 8, **dadurch gekennzeichnet, dass** der Umlauf des Rezesses (3b) im Wesentlichen einem Oval oder einer Ellipsenform folgt.

10. Hubkolben nach einem oder mehreren der vorhergehenden Ansprüche, **dadurch gekennzeichnet, dass** wenigstens ein Rezess (3b) um den Kolbenkörper mit unkonstanter Rezesstiefe umläuft.

11. Hubkolben nach einem oder mehreren der vorhergehenden Ansprüche, **dadurch gekennzeichnet, dass** wenigstens ein Kolbenring als Verdichtungsring ausgebildet ist und hierfür ein Nasenminutenring vorgesehen ist.

12. Hubkolben nach einem oder mehreren der vorhergehenden Ansprüche, **dadurch gekennzeichnet, dass** wenigstens ein Kolbenring als Ölabstreifring ausgebildet ist und hierfür ein Schlauchfederring, vorzugsweise ein Gleichfasenschlauchfederring oder ein Dachfasenschlauchfederring, vorgesehen ist.

13. Hubkolben nach Anspruch 12, **dadurch gekennzeichnet, dass** der Schlauchfederring wenigstens zwei nach außen vorragende Stege (5a, b; 9a, b aufweist.

14. Hubkolben nach Anspruch 13, **dadurch gekennzeichnet, dass** die Stege (5a,b; 9a,b) des Schlauchfederringes Steghöhen (5d1, 5d2; 9d1, 9d2) aufweisen, die, gemessen parallel zur Achse des Kolbenringes, gemeinsam nicht mehr als 20% der Höhe des Kolbenringes entsprechen und einzeln nicht mehr als jeweils 10% der Höhe des Kolbenringes entsprechen.

15. Hubkolben nach Anspruch 13 oder 14, **dadurch gekennzeichnet, dass** die Stege (5a,b; 9a,b) des Schlauchfederringes Steghöhen (5d1, 5d2; 9d1, 9d2) aufweisen, die, gemessen parallel zur Achse des Kolbenringes, unterschiedlich groß sind.

16. Hubkolben nach einem oder mehreren der Ansprüche 13 bis 15, **dadurch gekennzeichnet, dass** Anbindungswinkel (α, β) der Stege (5a,b; 9a,b) des Schlauchfederringes eine Winkelgröße von 0 bis 60 Grad aufweisen.

17. Hubkolben nach einem oder mehreren der Ansprüche 13 bis 16; **dadurch gekennzeichnet, dass** Anbindungswinkel (α, β) der Stege (5a,b; 9a,b) des Schlauchfederringes eine unterschiedliche und / oder assymetrische Winkelgröße aufweisen.

18. Hubkolben nach einem oder mehreren der Ansprüche 12 bis 17, **dadurch gekennzeichnet, dass** der Ölabstreifring wenigstens eine Öldrainage zum radialen Durchtritt von Öl aufweist.

19. Hubkolben nach Anspruch 18, **dadurch gekennzeichnet, dass** die Öldrainage als Bohrung (5c1) oder als Schlitz (5c2) ausgeführt ist.

20. Hubkolben nach einem oder mehreren der vorhergehenden Ansprüche, **dadurch gekennzeichnet, dass** die für einen Ölabstreifring vorgesehene dritte Ringnut (3) wenigstens eine Öldrainage aufweist.

21. Hubkolben nach Anspruch 20, **dadurch gekennzeichnet, dass** die Öldrainage zu einem hohlen Innern des Kolbenkörpers hin geschlossen ist oder in ein hohles Innere des Kolbenkörpers führt.

22. Hubkolben nach Anspruch 19 oder 20, **dadurch gekennzeichnet, dass** die Öldrainage in Umlaufrichtung der dritten Ringnut (3) eine schlitzförmige Erstreckung aufweist.

23. Hubkolben nach einem oder mehreren der Ansprüche 18 bis 22, **dadurch gekennzeichnet, dass** wenigstens eine Öldrainage des Ölabstreifringes mit wenigstens einer Öldrainage der dritten Ringnut (3) wenigstens teilweise korrespondiert.

## Claims

1. Reciprocating piston for a reciprocating piston compressor for generating compressed air for a vehicle, in particular for a commercial vehicle, wherein the reciprocating piston comprises a piston body having a piston head (1a), a piston skirt with piston skirt walls (1d) and preferably pin bosses (1c) for receiving a gudgeon pin, and further comprises three piston rings, which can be introduced into three encircling ring grooves (1; 2; 3) in the piston body, of which preferably at least the piston ring closer to the piston head (1a) is designed as a compression ring and at least one piston ring, preferably the piston ring closest to the piston skirt, is designed as an oil control ring, and wherein there are a first land (3a1) between the piston head (1a) and a first ring groove (1), a second land (3a2) between the first ring groove (1) and a second ring groove (2), a third land (3a3) between the second ring groove (2) and a third ring groove (3) and a fourth land (3a4) between the third ring groove (3) and the piston skirt, **characterized in that** the second land (3a2) of the piston body is set back from the diameter of the piston body by at least one recess (3b), over a partial section of its land height, the latter being measured parallel to the axis of the piston body.

2. Reciprocating piston according to Claim 1, **characterized in that** a first land (3a1) between the piston head (1a) and the first ring groove (1) and/or a fourth land (3a4) between the third ring groove (3) and the piston skirt also have/has a recess (3b).

3. Reciprocating piston according to Claim 1 or 2, **characterized in that** lands (3a1; 3a2; 3a3; 3a4) of the piston body are configured with different geometries by means of recesses (3b) and/or configured differently by means of recesses (3b) .

4. Reciprocating piston according to one or more of the preceding claims, **characterized in that** at least one recess (3b) is or has a step.

5. Reciprocating piston according to one or more of the preceding claims, **characterized in that** at least one recess (3b) is or has a groove encircling the piston body.

6. Reciprocating piston according to one or more of the preceding claims, **characterized in that** at least one recess (3b) is or has a chamfer encircling the piston body.

7. Reciprocating piston according to Claim 6, **characterized in that** the chamfer is adjacent to a ring groove (1; 2; 3) and/or faces or faces away from the ring groove (1; 2; 3).

8. Reciprocating piston according to one or more of the preceding claims, **characterized in that** at least one recess (3b) encircles the piston body in a rotationally asymmetrical and/or eccentric manner with respect to the axis of the piston body.

9. Reciprocating piston according to Claim 8, **characterized in that** the orbital path of the recess (3b) substantially follows an oval or an elliptical shape.

10. Reciprocating piston according to one or more of the preceding claims, **characterized in that** at least one recess (3b) encircles the piston body with an inconstant recess depth.

11. Reciprocating piston according to one or more of the preceding claims, **characterized in that** at least one piston ring is designed as a compression ring, and a taper-faced Napier ring is provided for this purpose.

12. Reciprocating piston according to one or more of the preceding claims, **characterized in that** at least one piston ring is designed as an oil control ring, and a coil spring loaded oil control ring, preferably a coil spring loaded double beveled oil control ring or a coil spring loaded beveled edge oil control ring, is provided for this purpose.

13. Reciprocating piston according to Claim 12, **characterized in that** the coil spring loaded oil control ring has at least two outward-projecting lands (5a, b; 9a, b).

14. Reciprocating piston according to Claim 13, **characterized in that** the lands (5a,b; 9a,b) of the coil spring loaded oil control ring have land heights (5d1, 5d2; 9d1, 9d2) which, when measured parallel to the axis of the piston ring, correspond jointly to no more than 20% of the height of the piston ring and correspond individually to no more than 10% each of the height of the piston ring.

15. Reciprocating piston according to Claim 13 or 14, **characterized in that** the lands (5a,b; 9a,b) of the coil spring loaded oil control ring have land heights (5d1, 5d2; 9d1, 9d2) which, when measured parallel to the axis of the piston ring, are different.

16. Reciprocating piston according to one or more of Claims 13 to 15, **characterized in that** connection angles (α, β) of the lands (5a,b; 9a,b) of the coil spring loaded oil control ring have an angle of 0 to 60 degrees.

17. Reciprocating piston according to one or more of Claims 13 to 16, **characterized in that** connection angles (α, β) of the lands (5a,b; 9a,b) of the coil spring loaded oil control ring have a different and/or asymmetric angle size.

18. Reciprocating piston according to one or more of Claims 12 to 17, **characterized in that** the oil control ring has at least one oil drain for the radial passage of oil.

19. Reciprocating piston according to Claim 18, **characterized in that** the oil drain is embodied as a hole (5c1) or a slot (5c2).

20. Reciprocating piston according to one or more of the preceding claims, **characterized in that** the third ring groove (3), which is provided for an oil control ring, has at least one oil drain.

21. Reciprocating piston according to Claim 20, **characterized in that** the oil drain is closed with respect to a hollow interior of the piston body or leads into a hollow interior of the piston body.

22. Reciprocating piston according to Claim 19 or 20, **characterized in that** the oil drain extends in the form of a slot in the circumferential direction of the third ring groove (3).

23. Reciprocating piston according to one or more of Claims 18 to 22, **characterized in that** at least one oil drain of the oil control ring corresponds at least partially to at least one oil drain of the third ring groove (3).

## Revendications

1. Piston alternatif pour un compresseur à pistons alternatifs pour la production d'air comprimé pour un véhicule, en particulier pour un véhicule utilitaire, le piston alternatif comprenant un corps de piston avec un fond de piston (1a), une jupe de piston avec des parois de jupe de piston (1d) et de préférence des bossages d'axe (1c) destinés à recevoir un axe de piston et comprenant trois segments de piston insérables dans trois gorges de segment (1; 2; 3) périphériques du corps de piston, parmi lesquels de préférence au moins le segment de piston le plus proche du fond de piston (1a) est constitué par un segment de compression ou un segment de mise sous pression et au moins un segment de piston, de préférence le segment de piston le plus proche de la jupe de piston, est constitué par un segment racleur d'huile et dans lequel une première nervure (3a1) est présente entre le fond de piston (1a) et une première gorge de piston (1), une deuxième nervure (3a2) est présente entre la première gorge de segment (1) et une deuxième gorge de segment (2), une troisième nervure (3a3) est présente entre la deuxième gorge de segment (2) et une troisième gorge de segment (3) et une quatrième nervure (3a4) est présente entre la troisième gorge de segment (3) et la jupe de piston, **caractérisé en ce que** la deuxième nervure (3a2) du corps de piston est rétractée par rapport au diamètre du corps de piston au moyen d'au moins un retrait (3b) sur une section partielle de sa hauteur de nervure, qui est mesurée parallèlement à l'axe du corps de piston.

2. Piston alternatif selon la revendication 1, **caractérisé en ce qu'**une première nervure (3a1) entre le fond de piston (1a) et la première gorge de segment (1) et/ou une quatrième nervure (3a4) entre la troisième gorge de segment (3) et la jupe de piston présentent également un retrait (3b).

3. Piston alternatif selon la revendication 1 ou 2, **caractérisé en ce que** des nervures (3a1; 3a2; 3a3; 3a4) du corps de piston sont configurées par des retraits (3b) de géométries différentes et/ou sont configurées différemment par des retraits (3b).

4. Piston alternatif selon une ou plusieurs des revendications précédentes, **caractérisé en ce qu'**au moins un retrait (3b) est ou présente un gradin.

5. Piston alternatif selon une ou plusieurs des revendications précédentes, **caractérisé en ce qu'**au moins un retrait (3b) est ou présente une gorge s'étendant autour du corps de piston.

6. Piston alternatif selon une ou plusieurs des revendications précédentes, **caractérisé en ce qu'**au moins un retrait (3b) est ou présente un chanfrein s'étendant autour du corps de piston.

7. Piston alternatif selon la revendication 6, **caractérisé en ce que** le chanfrein d'une gorge de segment (1; 2; 3) est proche de et/ou tourné vers ou détourné de la gorge de segment (1; 2; 3).

8. Piston alternatif selon une ou plusieurs des revendications précédentes, **caractérisé en ce qu'**au moins un retrait (3b) s'étend autour du corps de piston sans symétrie de rotation et/ou de façon excentrique par rapport à l'axe du corps de piston.

9. Piston alternatif selon la revendication 8, **caractérisé en ce que** le pourtour du retrait (3b) suit essentiellement une forme ovale ou une forme d'ellipse.

10. Piston alternatif selon une ou plusieurs des revendications précédentes, **caractérisé en ce qu'**au moins un retrait (3b) s'étend autour du corps de piston avec une profondeur de retrait non constante.

11. Piston alternatif selon une ou plusieurs des revendications précédentes, **caractérisé en ce qu'**au moins un segment de piston est réalisé comme segment de compression et qu'il est prévu à cet effet un segment à face conique et talon.

12. Piston alternatif selon une ou plusieurs des revendications précédentes, **caractérisé en ce qu'**au moins un segment de piston est réalisé en forme de segment racleur d'huile et **en ce qu'**il est prévu à cet effet un segment à ressort de tuyau, de préférence un segment à ressort de tuyau à biseau identique ou un segment à ressort de tuyau à biseau en forme de toit.

13. Piston alternatif selon la revendication 12, **caractérisé en ce que** le segment à ressort de tuyau présente au moins deux nervures (5a, b; 9a, b) saillantes vers l'extérieur.

14. Piston alternatif selon la revendication 13, **caractérisé en ce que** les nervures (5a, b; 9a, b) du segment à ressort de tuyau présentent des hauteurs de nervure (5d1, 5d2; 9d1, 9d2) qui, mesurées parallèlement à l'axe du segment de piston, correspondent ensemble à pas plus de 20 % de la hauteur du segment de piston et correspondent individuellement chacune à pas plus de 10 % de la hauteur du segment de piston.

15. Piston alternatif selon la revendication 13 ou 14, **caractérisé en ce que** les nervures (5a, b; 9a, b) du segment à ressort de tuyau présentent des hauteurs de nervure (5d1, 5d2; 9d1, 9d2) qui, mesurées parallèlement à l'axe du segment de piston, sont de grandeur différente.

16. Piston alternatif selon une ou plusieurs des revendications 13 à 15, **caractérisé en ce que** des angles de jonction (α, β) des nervures (5a, b; 9a, b) du segment à ressort de tuyau présentent une valeur d'angle de 0 à 60 degrés.

17. Piston alternatif selon une ou plusieurs des revendications 13 à 16, **caractérisé en ce que** des angles de jonction (α, β) des nervures (5a, b; 9a, b) du segment à ressort de tuyau présentent une grandeur d'angle différente et/ou asymétrique.

18. Piston alternatif selon une ou plusieurs des revendications 12 à 17, **caractérisé en ce que** le segment racleur d'huile présente au moins une ouverture de drainage d'huile pour le passage radial d'huile.

19. Piston alternatif selon la revendication 18, **caractérisé en ce que** l'ouverture de drainage d'huile est réalisée sous forme de trou (5c1) ou de fente (5c2) .

20. Piston alternatif selon une ou plusieurs des revendications précédentes, **caractérisé en ce que** la troisième gorge de segment (3) prévue pour un segment racleur d'huile présente au moins une ouverture de drainage d'huile.

21. Piston alternatif selon la revendication 20, **caractérisé en ce que** l'ouverture de drainage d'huile est fermée vers un intérieur creux du corps de piston ou conduit dans un intérieur creux du corps de piston.

22. Piston alternatif selon la revendication 19 ou 20, **caractérisé en ce que** l'ouverture de drainage d'huile présente une extension en forme de fente dans la direction périphérique de la troisième gorge de segment (3).

23. Piston alternatif selon une ou plusieurs des revendications 18 à 22, **caractérisé en ce qu'**au moins une ouverture de drainage d'huile du segment racleur d'huile correspond au moins en partie à au moins une ouverture de drainage d'huile de la troisième gorge de segment (3).
